# EUROPEAN PATENT APPLICATION

(11) **EP 3 687 211 A1**
(43) Date of publication of application: **29.07.2020**
(21) Application number: 18859129.1
(22) Date of filing: 18.09.2018
(51) Int. Cl.: H04W 16/28, H04B 7/06, H04B 7/08, H04W 24/04

(54) **USER TERMINAL AND WIRELESS COMMUNICATION METHOD**

(30) Priority: 19.09.2017 JP 2017195458
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); NA, Chongning, Beijing 100190 (CN); LIU, Min, Beijing 100190 (CN)
(74) Representative: Hoffmann Eitle
(86) International application number: PCT/JP2018/034525
(87) International publication number: WO 2019/059193

(57) **Abstract**

The present invention is designed to control the detection of beam failures properly. According to an example of the present disclosure, a user terminal has a receiving section that receives configuration information related to radio link failure (RLF) and/or beam recovery (BR), and a control section that controls beam failure detection in the BR based on a relationship between the RLF and the BR configured based on the configuration information.

## Description

### Technical Field

The present disclosure relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). In addition, the specifications of LTE-A (LTE-advanced and LTE Rel. 10, 11, 12 and 13) have also been drafted for the purpose of achieving increased capacity and enhancement beyond LTE (LTE Rel. 8 and 9).

Successor systems of LTE are also under study (for example, referred to as "FRA (Future Radio Access)," "5G (5th Generation mobile communication system)," "5G+ (plus)," "NR (New Radio)," "NX (New radio access)," "FX (Future generation radio access)," "LTE Rel. 14 or 15 and later versions," etc.).

In existing LTE systems (LTE Rel. 8 to 13), the quality of a radio link is subject to monitoring (RLM (Radio Link Monitoring)). When a radio link failure (RLF) is detected based on RLM, a user terminal (UE (User Equipment)) is required to re-establish the RRC (Radio Resource Control) connection.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Furthermore, future radio communication systems (for example, LTE Rel. 14 or later versions, NR, 5G, etc.) are under study to allow communication using beamforming (BF).

Also, in order to prevent occurrence of radio link failures (RLFs) in future radio communication systems, studies are underway to perform procedures for detecting beam failures and switching to other beams (which may be referred to as "beam recovery (BR) procedures," and the like). The problem with this beam recovery procedures lies in how to detect beam failures.

The present invention has been made in view of the above, and it is therefore an object of the present invention to provide a user terminal and a radio communication method, whereby the detection of beam failures can be controlled properly.

### Solution to Problem

According to one aspect of the present disclosure, a user terminal has a receiving section that receives configuration information related to radio link failure (RLF) and/or beam recovery (BR), and a control section that controls beam failure detection in the BR based on a relationship between the RLF and the BR configured based on the configuration information.

### Advantageous Effects of Invention

According to one aspect of the present disclosure, the detection of beam failures can be controlled properly.

### Brief Description of Drawings

FIG. 1 is a schematic diagram, in which RLF is detected based on IS/OOS;
FIG. 2 is a diagram to illustrate an example of beam recovery procedures;
FIG. 3 is a diagram to illustrate an example of an active set and an example of a candidate set according to the present embodiment;
FIGs. 4A and 4B are flowcharts to illustrate examples of beam failure detection according to the present embodiment;
FIG. 5 is a diagram to illustrate an exemplary schematic structure of a radio communication system according to the present embodiment;
FIG. 6 is a diagram to illustrate an exemplary overall structure of a radio base station according to the present embodiment;
FIG. 7 is a diagram to illustrate an exemplary functional structure of a radio base station according to the present embodiment;
FIG. 8 is a diagram to illustrate an exemplary overall structure of a user terminal according to the present embodiment;
FIG. 9 is a diagram to illustrate an exemplary functional structure of a user terminal according to the present embodiment; and
FIG. 10 is a diagram to illustrate an exemplary hardware structure of a radio base station and a user terminal according to the present embodiment.

### Description of Embodiments

Future radio communication systems (for example, LTE Rel. 14 or later versions, NR, 5G, etc.) are under study to allow communication using beamforming (BF).

For example, beams that are used by a user terminal and/or a radio base station (for example, a gNB (gNodeB)) may include beams that are used to transmit signals (also referred to as "transmitting beams," "Tx beams," etc.), beams that are used to receive signals (also referred to as "receiving beams," "Rx beams," etc.) and so forth. A pair of a transmitting beam of the transmitting end and a receiving beam of the receiving end may be referred to as a "beam pair link (BPL)."

To select a BPL, the base station and the user terminal may autonomously select beams that are suitable for both, or may exchange information that can identify combinations that are suitable for both, via RRC, MAC CE, L1 signaling, etc., and select beams based on this information.

Between different BPLs, either transmission or receipt, or both, may use different antenna devices for transmission and receipt (for example, antenna panels, antenna element sets, transmitting/receiving points (also referred to as "TRPs (Transmission and Reception Points)," "TxRPs (Transmitter and Reception Points)," "TRxPs (Transmission and Receiver Points)," etc.), and so forth). In this case, quasi-co-location (QCL), which indicates channels' statistical properties, also varies between different BPLs. Therefore, QCL may be the same or different between different BPLs, and information as to whether QCL is the same or different may be identified by the transmitter/receiver, based on signaling or measurements.

In an environment to use BF, a radio link is more susceptible to the impact of blockage from obstacles, and so the quality of a radio link is more likely to deteriorate. There is a danger that, if the quality of a radio link deteriorates, radio link failures (RLFs) might occur frequently. When an RLF occurs, it is necessary to re-connect with cells, so that, if RLFs occur frequently, this may lead to a decline in system throughput.

For this reason, the method of radio link monitoring (RLM) for future radio communication systems is being discussed. For example, envisaging future radio communication systems, research is underway to support one or more downlink signals (also referred to as "DL-RSs (Reference Signals)" and the like) for RLM.

Resources for DL-RSs (DL-RS resources) may be associated with resources and/or ports for synchronization signal blocks (SSBs) or channel state measurement RSs (CSI-RSs (Channel State Information RSs)). Note that SSBs may be referred to as "SS/PBCH (Physical Broadcast CHannel) blocks" and the like.

The DL-RS may be at least one of a primary synchronization signal (PSS), a secondary synchronization signal (SSS), a mobility reference signal (MRS), a CSI-RS, a demodulation reference signal (DMRS), a beam-specific signal and so forth, or may be a signal formed by enhancing and/or changing these signals (for example, a signal formed by changing the density and/or the cycle).

A user terminal may be configured, by higher layer signaling, to perform measurements using DL-RS resources. The assumption here is that the user terminal, configured to perform such measurements, determines whether a radio link is in a synchronous state (IS (In-Sync)) or in an asynchronous state (OOS (Out-Of-Sync)) based on measurement results in DL-RS resources. Default DL-RS resources where the user terminal may conduct RLM in case no DL-RS resource is configured from the radio base station may be set forth in the specification.

If the quality of a radio link estimated (or "measured") based at least on one of the DL-RS resources configured exceeds a predetermined threshold Qin, the user terminal may judge that the radio link is in IS ("In-Sync").

If the quality of a radio link estimated based at least on one of the DL-RS resources configured falls below a predetermined threshold Qₒᵤₜ, the user terminal may judge that the radio link is in OOS ("Out-Of-Sync"). Note that the radio link quality here may correspond to, for example, the block error rate (BLER) of a hypothetical PDCCH.

In existing LTE systems (LTE Rel. 8 to 13), IS and/or OOS (IS/OOS) are indicated from the physical layer to higher layers (for example, the MAC layer, the RRC layer, etc.) in a user terminal, and RLF is detected based on the indications of IS/OOS.

To be more specific, when the user terminal receives an OOS indication pertaining to a predetermined cell (for example, the primary cell) N310 times, the user terminal will activate (start) a timer T310. When the user terminal receives an IS indication pertaining to that predetermined cell N311 times while the timer T310 is running, the user terminal will stop the timer T310. When the timer T310 expires, the user terminal judges that RLF has been detected with respect to that predetermined cell.

Note that the labeling "N310," "N311," "T310" and others are by no means limiting. T310 may be referred to as the "timer for RLF detection" or the like. N310 may be referred to as the "number of times OOS is indicated before the timer T310 is activated" or the like. N311 may be referred to as the "number of times IS is indicated before the timer T310 is stopped" or the like.

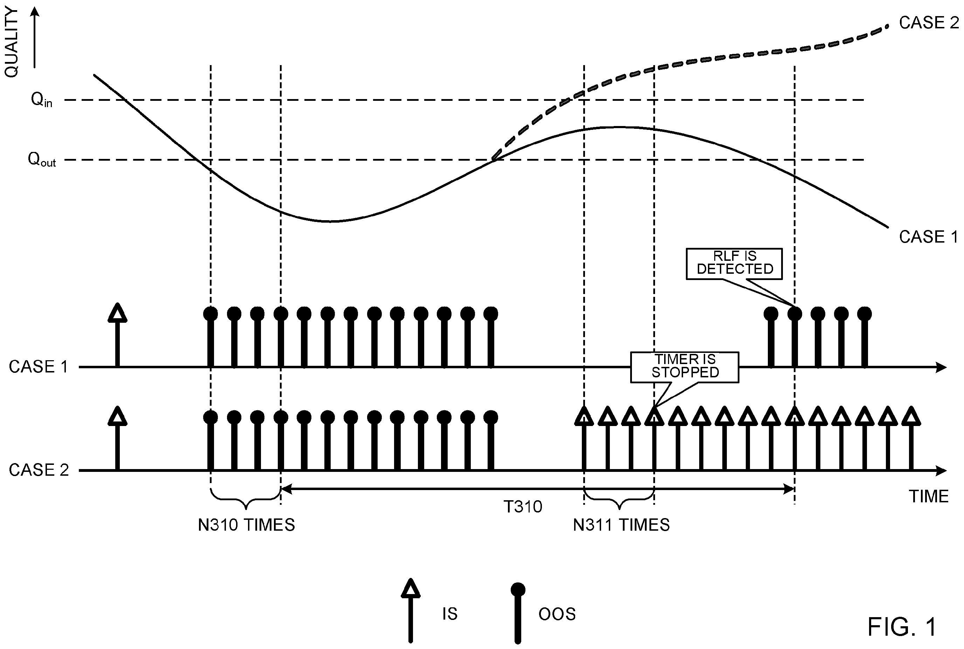

FIG. 1 is a schematic diagram, in which RLF is detected based on IS/OOS. This drawing assumes that N310=N311=4. T310 indicates the period from the activation of the timer T310 to its expiration, but does not indicate the timer's counter.

The upper part of FIG. 1 illustrates two cases (case 1 and case 2) in which the estimated quality of a radio link changes. The lower part of FIG. 1 illustrates IS/OOS indications that correspond to the above two cases.

In case 1, first, OOS occurs N310 times, and so the timer T310 is started. After that, the timer T310 expires while the radio link quality does not exceed threshold Qin, and so RLF is detected.

Referring to case 2, although the timer T310 starts as in case 1, following this, the radio link quality exceeds threshold Qin and IS occurs N311 times, and so the timer T310 stops.

Now, envisaging future radio communication systems (for example, LTE Rel. 14 or later versions, NR, 5G, etc.), research is underway to execute procedures for switching to other beams (which may be referred to as "beam recovery (BR)," "L1/L2 beam recovery," etc.), when the quality of a particular beam deteriorates, so as to prevent RLF from occurring. Although, as mentioned earlier, RLF is detected by controlling RS measurements in the physical layer and controlling the activation and expiration of timers in higher layers, and the recovery from RLF should follow the same procedures as random access, there is an expectation that the procedures for switching to other beams (BR, L1/L2 beam recovery, etc.) will be made simpler than the recovery from RLF, at least in part of the layers.

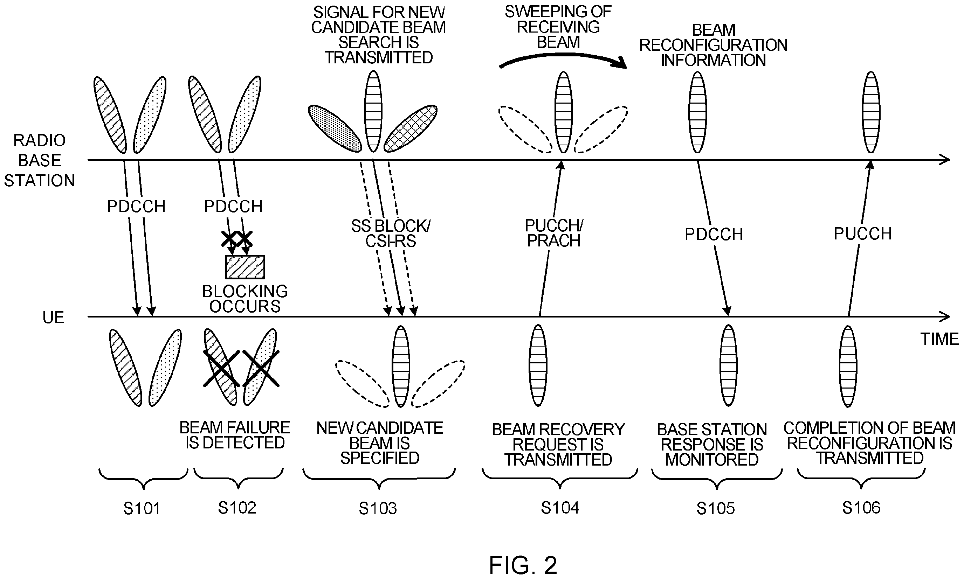

FIG. 2 is a diagram to illustrate an example of beam recovery procedures. The number of beams and the like are examples and not limiting. In the initial state (step S101) illustrated in FIG. 2, a user terminal receives a downlink control channel (PDCCH (Physical Downlink Control CHannel)), which is transmitted from a radio base station using two beams.

In step S102, the radio waves from the radio base station are blocked, and therefore the user terminal is unable to detect the PDCCH. Such blocking might occur due to, for example, the impacts of obstacles between the user terminal and the radio base station, fading, interference, and so forth.

The user terminal detects beam failures when predetermined conditions are met. The radio base station may judge that the user terminal has detected a beam failure when no report arrives from the user terminal, or the radio base station may judge that the user terminal has detected a beam failure when a predetermined signal (the beam recovery request in step

S104) is received from the user terminal.

In step S103, the user terminal starts a search for new candidate beams to use for communication, for beam recovery. To be more specific, upon detecting a beam failure, the user terminal performs measurements based on pre-configured DL-RS resources, and identifies one or more new candidate beams that are desirable (that have good quality, for example). In this example, one beam is identified as a new candidate beam.

In step S104, the user terminal, having identified a new candidate beam, transmits a beam recovery request (beam recovery request signal). The beam recovery request may be transmitted, for example, by using at least one of an uplink control channel (PUCCH (Physical Uplink Control CHannel)), a random access channel (PRACH (Physical Random Access CHannel)), and a UL grant-free PUSCH (Physical Uplink Shared CHannel).

The beam recovery request may include information about the new candidate beam identified in step S103. The resource for the beam recovery request may be associated with the new candidate beam. The information about the beam may be reported by using, for example, a beam index (BI), a predetermined reference signal's port and/or resource index (for example, a CSI-RS resource indicator (CRI)), and so forth.

In step S105, the radio base station, having detected the beam recovery request, transmits a response signal in response to the beam recovery request from the user terminal. This response signal may contain reconfiguration information (for example, configuration information of DL-RS resources) related to one or more beams. The response signal may be transmitted, for example, in a user terminal-common search space in the PDCCH. The user terminal may select the transmitting beam and/or the receiving beam to use based on the beam reconfiguration information.

In step S106, the user terminal may transmit, to the radio base station, a message to the effect that beam reconfiguration has been completed. This message may be transmitted by using the PUCCH, for example.

A successful beam recovery (BR success) may refer to, for example, the case of arriving at step S106. On the other hand, a beam recovery failure (BR failure) may refer to, for example, the case where no candidate beam can be identified in step S103.

While engaged in the above beam recovery procedures, the user terminal monitors the DL-RS resources for beam management (for example, CSI-RS resources and/or SS/PBCH block), and judges whether or not the PDCCH can be detected. Control resource sets (CORESETs) for the PDCCH may be configured per DL-RS resource. The user terminal measures the DL-RS resources associated with each CORESET, estimates the channel quality of the PDCCH, and detects beam failures.

To provide bases for this beam failure detection, (1) a method based on the radio link quality of hypothetical PDCCH (see FIG. 1) and (2) a method based on L1-RSRP (the reference signal received power (RSRP) in the physical layer) are under study.
(1) The method based on the radio link quality of a hypothetical PDCCH is similar to RLF control and/or has high affinity with RLF control. Consistent metrics are used for beam failure evaluation and RLF. On the other hand, RSRP is not a direct criterion for the quality of control channels. Furthermore, when RSRP is used, filtering for ensuring that fading dip has no impact on RSRP takes a long time.
(2) The method based on L1-RSRP is similar to beam management control and/or has high affinity with beam management control. Consistent metrics are used for beam failure evaluation and beam management. Beam recovery's primary purpose is to take measures against blockage (for example, blockage caused by obstacles), and the RSRP of signals and/or channels is often used as an indicator. When the beams in neighboring cells change quickly, interference measurements also change quickly. In such a case, a relatively long time is required to obtain a stable result, and L1 is not suitable. Since noise and/or interference do not have to be estimated (measured), the complexity on the UE side can be reduced.

In this way, (1) the method based on the radio link quality of a hypothetical PDCCH and (2) the method based on L1-RSRP have different advantages and disadvantages, and therefore the best way to detect beam failures varies depending on the situation. So, the present inventors have come up with the idea of controlling the detection of beam failures by choosing an appropriate method depending on the situation.

Now, embodiments of the present invention will be described below in detail with reference to the accompanying drawings. Here, assumptions that are held with respect to the PDCCH for beam failure detection according to the present embodiment will be described below.

With the present embodiment, the demodulation reference signal (DMRS) for a downlink control channel (PDCCH) may be quasi-co-located (QCL) with DL-RS resources in the active set. Here, the active set may be also seen as a set of beams that can be used to transmit the PDCCH, and may be referred to as the "first set" or the like. Information to indicate these DL-RS resources of the active set may be reported from a radio base station to a user terminal by using higher layer signaling and/or physical layer signaling (for example, DCI).

Here, quasi-co-location (QCL) means that it is possible to assume that at least one of the space, the average gain, the delay and the doppler parameter is the same between a number of different signals. For example, it may be assumed that a DL-RS resource in the active set, where QCL with the DMRS for a PDCCH is assumed, is transmitted using the same beam (antenna port) as that of the PDCCH.

In addition, information to indicate DL-RS resources in the candidate set may be reported from the radio base station to the user terminal by using higher layer signaling and/or physical layer signaling (for example, DCI). Here, the candidate set may be also seen as a set of beams that serve as candidates for switching in BR, and may be referred to as the "second set" or the like.

Note that the DL-RS resources in the active set and the DL-RS resources in the candidate set may be CSI-RS resources and/or SS/PBCH blocks, respectively. CSI-RS resources may be identified by CSI-RS resource indicators (CRIs), and SS/PBCH blocks may be identified by time-direction indices (SS/PBCH indices).

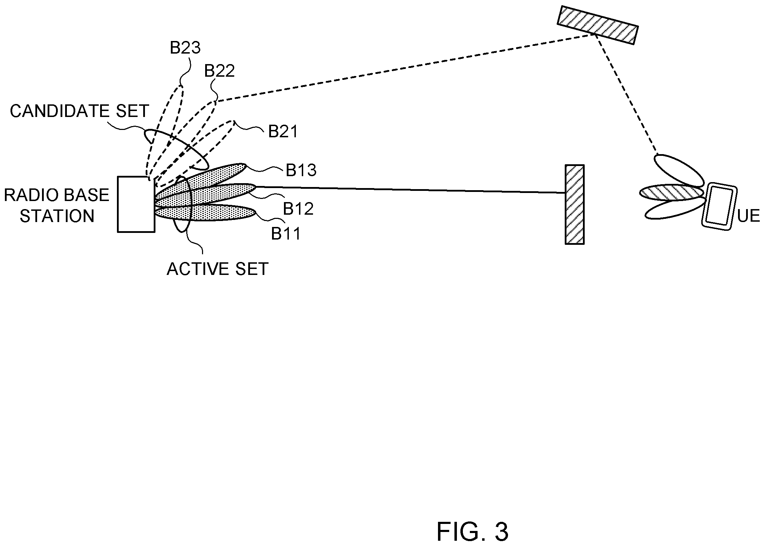

FIG. 3 is a diagram to illustrate an example of an active set and an example of a candidate set. Referring to FIG. 3, DL-RS resources that are respectively associated with a PDCCH that is transmitted in beams B11 to B13 in the active set are monitored. A user terminal may detect beam failures based on measurement results of these DL-RS resources, and switch to beams in the candidate set (in FIG. 3, for example, the user terminal may switch from beam B12 to beam B22).

With the present embodiment, the user terminal controls beam failure detection in BR based on the relationship with radio link failure (RLF) and/or beam recovery (BR).

To be more specific, the user terminal receives configuration information related to RLF and/or BR. Based on this configuration information, RLF and/or BR are configured in the user terminal. This configuration information may be reported from the radio base station to the user terminal through higher layer signaling (at least one of, for example, RRC signaling, system information (for example, RMSI, etc.), and broadcast information).

BR and RLF, configured in the user terminal, may be controlled independently (in a decoupled manner), or may be controlled together (in a coupled manner). When BR and RLF are controlled in a decoupled manner, the user terminal does not have to transmit specific indications (such as an unsuccessful beam failure recovery indication) from the physical layer to higher layers, regardless of the result of beam failure recovery and/or the like. Note that whether or not the user terminal transmits a specific indication to higher layers may be configured by the radio base station (which is, for example, a gNB).

When BR and RLF are controlled in a coupled manner and recovery from a beam failure fails, the user terminal transmits a specific indication (for example, an unsuccessful beam failure recovery indication) to higher layers to inhibit further beam failure recovery.

When BR and RLF are controlled in a coupled manner and recovery from a beam failure succeeds, the user terminal transmits a specific indication (for example, a successful beam failure recovery indication) to higher layers to inhibit further beam failure recovery.

With the present embodiment, the user terminal may switch the method of detecting beam failures based on the relationship between BR and RLF (for example, based on whether or not BR and RLF are controlled in a decoupled manner (or in a coupled manner)).

To be more specific, when BR and RLF are controlled in a decoupled manner, the user terminal may detect beam failures using a method that is based on received power (for example, L1-RSRP) (first beam failure detection). Although L1-RSRP will be used in the first beam failure detection hereinafter, this is by no means limiting, and it is only necessary to use values (measured values and/or calculated values) that indicate the received power and/or the received strength of one or more downlink signals (DL-RSs). These values may be physical layer values (L1).

On the other hand, when BR and RLF are controlled in a coupled manner, the user terminal may detect beam failures using a method that is based on radio link quality (for example, the SINR of a hypothetical PDCCH) (second beam failure detection). Although the SINR will be used in the second beam failure detection hereinafter, this is by no means limiting, and it is only necessary to use values (measured values and/or calculated values) that indicate the radio link quality of one or more downlink signals (DL-RSs).

### (First Beam Failure Detection)

If BR is configured apart from RLF, the user terminal may control beam failure detection based on RSRP (Reference Signal Received Power) (first beam failure detection). These BR and RLF may be configured by higher layer signaling (at least one of, for example, RRC signaling, system information (for example, RMSI, etc.) and broadcast information).

Here, the RSRP may be, for example, L1-RSRP. This RSRP may be measured using DL-RS resources associated with each beam (for example, DL-RS resources where QCL with the DMRS for a PDCCH is assumed). These DL-RS resources may be CSI-RSs and/or SS/PBCH blocks.

In the first beam failure detection, beam failures may be detected based on comparison results between one or more DL-RS resources (for example, DL-RS resources that are associated with the DMRS of a PDCCH transmitted using B11 to B13 of FIG. 3) and a predetermined threshold. For example, a beam failure may be detected when all the DL-RS resources in the active set have RSRPs less than (lower than or equal to) a predetermined threshold.

Also, in the first beam failure detection, a predetermined time window may be used. This time window may be configured by higher layer signaling.

In the first beam failure detection, beam failures are detected based on the RSRP of the physical layer, so that beam failures can be detected quickly.

### (Second Beam Failure Detection)

When BR and RLF are configured in a coupled manner, the beam failure detection may be controlled based on the SINR (Signal to Interference plus Noise Ratio) (second beam failure detection). These BR and RLF may be configured by higher layer signaling (at least one of, for example, RRC signaling, system information (for example, RMSI, etc.) and broadcast information).

Here, the SINR may be, for example, an SINR at which a hypothetical PDCCH fulfills a predetermined block error rate (BLER). This SINR may be measured using DL-RS resources associated with each beam in the active set (for example, DL-RS resources where QCL with the DMRS of a PDCCH transmitted in beams B11 to B13 of FIG. 3 is assumed). These DL-RS resources may be CSI-RSs and/or SS/PBCH blocks.

In this example of the second beam failure detection, the user terminal may compare the SINR (radio link quality) with a threshold Q_{out_1}, which is used to judge OOS (and which is also referred to as the "first threshold," "Qₒᵤₜ," etc.), and/or with a threshold Q_{in_1}, which is used to judge IS (and which is also referred to as the "second threshold," "Qᵢₙ," etc.).

To be more specific, if the SINR that is estimated (or "measured") based at least on one of the DL-RS resources configured exceeds predetermined threshold Q_{in_1}, the user terminal may judge that the radio link is in IS.

If the SINR that is estimated based at least on one of the DL-RS resources configured falls below predetermined threshold Q_{out_1}, the user terminal may judge that the radio link is in OOS.

In the user terminal, IS and/or OOS (IS/OOS) are indicated from the physical layer to higher layers (for example, the MAC layer, the RRC layer, etc.), and a beam failure (that is, RLF) may be detected based on the indications of IS/OOS.

For example, when the OOS indication is detected N310 times in higher layers, the user terminal activates (starts) the timer T310. When the IS indication is detected N311 times while the timer T310 is activated, the user terminal stops the timer T310. When the timer T310 expires, the user terminal may detect a beam failure in the active set.

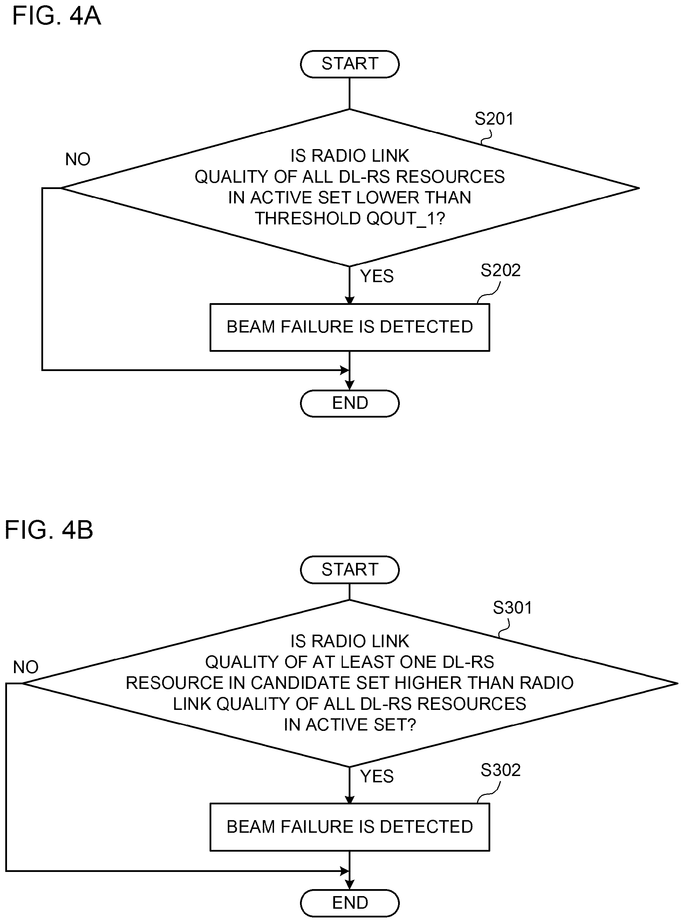

Threshold Q_{out_1} and/or Q_{in_1} for use for detecting beam failures in the second beam failure detection will be described below. Also, an example of the second beam failure detection will be described below with reference to FIGs. 4.

### <Threshold Q_{out_1}>

Threshold Q_{out_1} is defined so that the radio link quality associated with DL-RS resources in the active set indicates a level at which receipt cannot be performed reliably. This threshold Q_{out_1} may be a radio link quality corresponding to an X₁% (for example, X₁=10%) BLER of a hypothetical PDCCH.

The user terminal receives information about the hypothetical PDCCH (also referred to as the "first hypothetical PDCCH information," the "first parameter set," etc.). This first hypothetical PDCCH information is reported to the user terminal by higher layer signaling and/or physical layer signaling (for example, DCI). The user terminal may control threshold Q_{out_1} based on this first hypothetical PDCCH information.

This first hypothetical PDCCH information may include, for example, at least one of information indicating a specific resource set (for example, the number of symbols in a specific CORESET), information indicating a specific aggregation level, information indicating a specific DCI format, information indicating a method of mapping PDCCH resources to the physical layer (information to indicate, for example, whether or not distributed interleaving is performed within a CORESET), information indicating the arrangement pattern for the DMRS for the hypothetical PDCCH, and information indicating a predetermined BLER (X₁). Alternatively, this first hypothetical PDCCH may be a specific DCI format of a specific CORESET, configured by system information (RMSI (Remaining Minimum System Information) or SIB (System Information Block)). In this case, part of the higher layer signaling overhead for identifying the hypothetical PDCCH information can be reduced.

In addition, when QCL is assumed between the DMRS for a PDCCH and a CSI-RS resource, the above first hypothetical PDCCH information may include information related to the relationship between the PDCCH DMRS and the CSI-RS (for example, information to indicate the ratio of the density of the PDCCH DMRS and the density of the CSI-RS, and/or the ratio of the energy per resource element (RE) of the PDCCH and the energy per RE of the CSI-RS). The user terminal may demodulate the PDCCH based on this information about the relationship.

In addition, when QCL is assumed between the DMRS for a PDCCH and an SS/PBCH block, the first hypothetical PDCCH information may include information about the relationship between the PDCCH DMRS and the SS/PBCH block (for example, information to indicate the ratio between the energy per RE of the PDCCH and the energy per RE of a signal in the SS/PBCH block). Here, the signal in the SS/PBCH block is the PSS, the SSS or the DMRS for the PBCH. The user terminal may demodulate the PDCCH based on this QCL information.

### <Threshold Q_{in_1}>

Threshold Q_{in_1} is defined so that the radio link quality associated with DL-RS resources in the active set indicates a level at which receipt can be performed significantly more reliably than at the level indicated by threshold Q_{out_1}. This threshold Q_{in_1} may be a radio link quality corresponding to an Y₁% (for example, Y₁=2%) BLER of a hypothetical PDCCH.

The user terminal receives information about the hypothetical PDCCH (also referred to as the "second hypothetical PDCCH information," the "second parameter set," etc.). This second hypothetical PDCCH information is reported to the user terminal by higher layer signaling and/or physical layer signaling (for example, DCI). The user terminal may control threshold Q_{in_1} based on this second hypothetical PDCCH information.

This second hypothetical PDCCH information may include, for example, at least one of information indicating a specific resource set (for example, the number of symbols in a specific CORESET), information indicating a method of mapping PDCCH resources to the physical layer (information to indicate, for example, whether or not distributed interleaving is performed within a CORESET), information indicating a specific aggregation level, information indicating a specific DCI format, information indicating the arrangement pattern for the DMRS for the hypothetical PDCCH, and information indicating a predetermined BLER (Yi). Alternatively, the second hypothetical PDCCH may be a specific DCI format for a specific CORESET configured by RMSI or SIB. In this case, part of the higher layer signaling overhead for identifying the hypothetical PDCCH information can be reduced.

In addition, when QCL is assumed between the DMRS for a PDCCH and a CSI-RS resource, the above second hypothetical PDCCH information may include information related to the relationship between the PDCCH DMRS and the CSI-RS (for example, information to indicate the ratio of the density of the PDCCH DMRS and the density of the CSI-RS, and/or the ratio of the energy per resource element (RE) of the PDCCH and the energy per RE of the CSI-RS). The user terminal may demodulate the PDCCH based on this information about the relationship.

In addition, when QCL is assumed between the DMRS for a PDCCH and an SS/PBCH block, the above second hypothetical PDCCH information may include information about the relationship between the PDCCH DMRS and the SS/PBCH block (for example, information to indicate the ratio between the energy per RE of the PDCCH and the energy per RE of a signal in the SS/PBCH block). Here, the signal in the SS/PBCH block is the PSS, the SSS or the DMRS for the PBCH. The user terminal may demodulate the PDCCH based on this QCL information.

Note that the first hypothetical PDCCH information and the second hypothetical PDCCH information may be different or common. When the first hypothetical PDCCH information and the second hypothetical PDCCH information are common, the user terminal identifies the first hypothetical PDCCH information and the second hypothetical PDCCH information based on one parameter set, and checks whether or not each threshold is fulfilled. In this case, the overhead of higher layer signaling can be reduced.

### <Beam Failure Detection>

The user terminal may control the detection of beam failures based on at least one of above threshold Q_{out_1}, the radio link quality of one or more DL-RS resources in the active set (first set), and the radio link quality of DL-RS resources in the candidate set (second set).

FIGs. 4A and 4B are flowcharts to indicate examples of beam failure detection according to the second embodiment. As illustrated in FIG. 4A, the user terminal may detect a beam failure when the radio link quality associated with all DL-RS resources in the active set is lower than threshold Q_{out_1} (step S201: Yes) (step S202).

For example, referring to FIG. 3, if the radio link quality corresponding to the BLER of the hypothetical PDCCH transmitted in beams B11 to B13 is lower than threshold Q_{out_1}, a beam failure is detected.

Alternatively, as illustrated in FIG. 4B, when the radio link quality associated with at least one DL-RS resource in the candidate set is higher than the radio link quality associated with all the DL-RS resources in the active set (step S301: Yes), a beam failure may be detected (step 302).

For example, referring to FIG. 3, when at least one of the radio link quality corresponding to the BLER of the hypothetical PDCCH transmitted in beams B21 to B23 is higher than the radio link quality corresponding to the BLER of the hypothetical PDCCH transmitted in beams B11 to B13, a beam failure is detected.

In the second beam failure detection, beam failures are detected based not only on physical layer control but also based on higher layer control, so that beam failures can be detected more properly.

### (Radio Communication System)

Now, the structure of a radio communication system according to the present embodiment will be described below. In this radio communication system, communication is performed using at least one of the above examples or a combination of them.

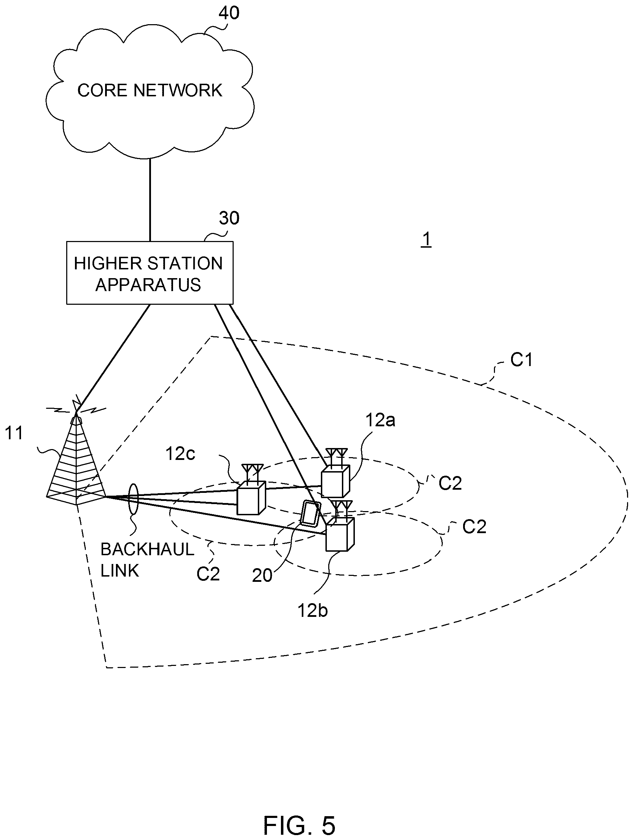

FIG. 5 is a diagram to illustrate an exemplary schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, with a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 and so forth are not limited to those illustrated in the drawings.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to a communication parameter that is applied to transmission and/or receipt of a given signal and/or channel, and represent at least one of the subcarrier spacing, the bandwidth, the duration of symbols, the length of cyclic prefixes, the duration of subframes, the length of TTIs, the number of symbols per TTI, the radio frame configuration, the filtering process, the windowing process, and so on.

The radio base station 11 and a radio base station 12 (or two radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but these are by no means limiting. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations each having a local coverage, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

The user terminals 20 are terminals that support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands that are each formed with one or contiguous resource blocks, per terminal, and allowing a plurality of terminals to use mutually different bands. Note that the uplink and downlink radio access schemes are not limited to the combinations of these, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The L1/L2 control channels include at least one of DL control channels (such as a PDCCH (Physical Downlink Control CHannel) and/or an EPDCCH (Enhanced Physical Downlink Control CHannel)), a PCFICH (Physical Control Format Indicator CHannel), and a PHICH (Physical Hybrid-ARQ Indicator CHannel). Downlink control information (DCI), which includes PDSCH and/or PUSCH scheduling information and so on, is communicated by the PDCCH.

Note that scheduling information may be reported in DCI. For example, the DCI to schedule receipt of DL data may be referred to as "DL assignment," and the DCI to schedule transmission of UL data may also be referred to as "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### (Radio Base Station)

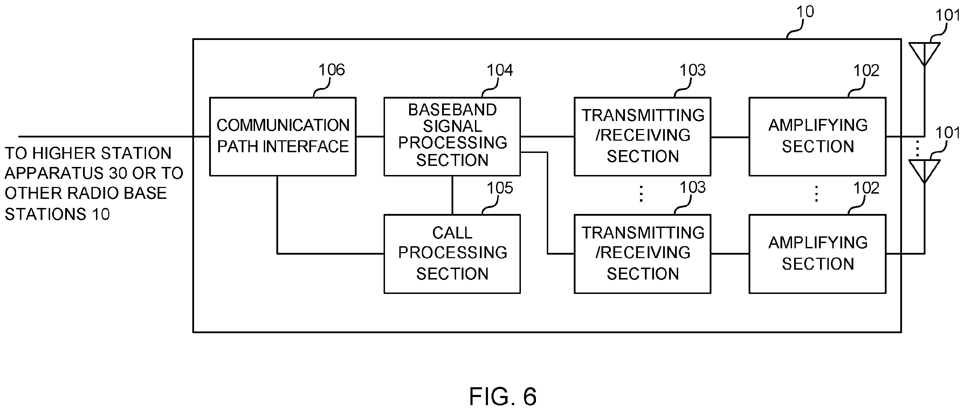

FIG. 6 is a diagram to illustrate an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30, to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base station 10, and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas. In addition, the transmitting/receiving sections 103 are designed so that single-BF or multiple-BF operations can be used.

The transmitting/receiving sections 103 may transmit signals by using transmitting beams, or receive signals by using receiving beams. Transmitting/receiving sections 103 may transmit and/or receive signals by using predetermined beams determined by control section 301.

The transmitting/receiving sections 103 may receive various pieces of information described in each of the examples above, from the user terminal 20, or transmit these to the user terminal 20. For example, the transmitting/receiving sections 103 transmit at least one of first hypothetical PDCCH information, second hypothetical PDCCH information, information to indicate the configuration of DL-RS resources for measurement (for example, CSI-RS resources and/or SS/PBCH blocks), and information to indicate associations between DMRS ports and CSI-RSs.

The transmitting/receiving sections 103 may transmit configuration information pertaining to radio link failures (RLF) and/or beam recovery (BR).

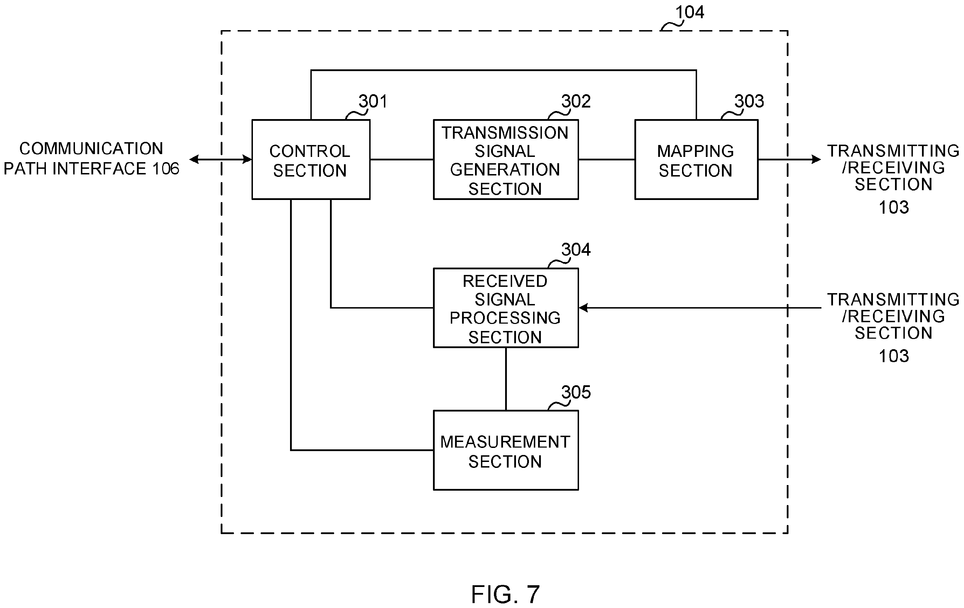

FIG. 7 is a diagram to illustrate an exemplary functional structure of a radio base station according to the present embodiment. Note that, although this example primarily illustrates functional blocks that pertain to characteristic parts of the present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals, and so on, based on the results of deciding whether or not retransmission control is necessary for uplink data signals, and so on.

The control section 301 controls scheduling of synchronization signals (for example, PSS/SSS), downlink reference signals (for example, CRS, CSI-RS, DMRS, etc.) and the like.

The control section 301 may exert control so that transmitting beams and/or receiving beams are formed by using digital BF (for example, precoding) in the baseband signal processing section 104 and/or analog BF (for example, phase rotation) in the transmitting/receiving sections 103.

The control section 301 may control the configurations of RLF and/or BR based on configuration information related to radio link failures (RLF) and/or beam recovery (BR). Based on the relationship between these RLF and BR, the control section 301 may control the beam failure detection in the BR.

The control section 301 may control radio link monitoring (RLM) and/or beam recovery (BR) for the user terminal 20.

To be more specific, the control section 301 controls the generation and/or transmission of information about a hypothetical PDCCH (downlink control channel) (hypothetical PDCCH information). The hypothetical PDCCH information may include at least one of information to indicate a specific set of control resources, information to indicate a specific aggregation level, information to indicate the format of downlink control information, information to indicate the pattern of the demodulation reference signal, and information to indicate a predetermined block error rate.

The transmission signal generation section 302 generates downlink signals (downlink control signals, downlink data signals, downlink reference signals, and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates, modulation schemes and the like that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). The received signal processing section 304 can be constituted by a signal processor, a signal processing circuit or signal processing apparatus that can be described based on general understanding of the technical field to which the present disclosure pertains.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements, and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI) and so on. The measurement results may be output to the control section 301.

### (User Terminal)

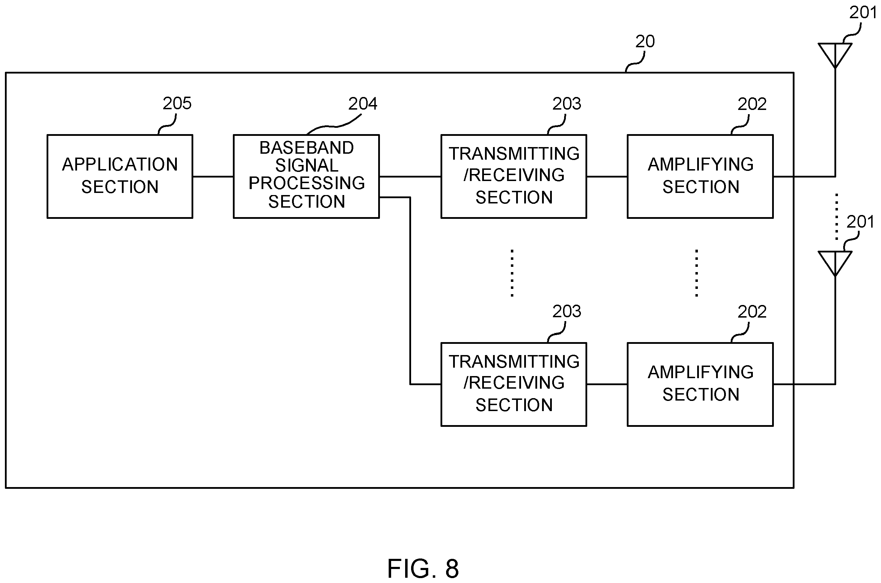

FIG. 8 is a diagram to illustrate an exemplary overall structure of a user terminal according to the present embodiment. A user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203.

Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may further have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas. In addition, the transmitting/receiving sections 203 are structured so that single-BF and multiple-BF can be used.

The transmitting/receiving sections 203 may transmit signals by using transmitting beams, or receive signals by using receiving beams. The transmitting/receiving sections 203 may transmit and/or receive signals by using predetermined beams selected by the control section 401.

The transmitting/receiving sections 203 may receive various pieces of information described in each of the examples above, from the radio base station 10, and/or transmit these to the radio base station 10. For example, the transmitting/receiving sections 203 transmit at least one of first hypothetical PDCCH information, second hypothetical PDCCH information, information to indicate the configuration of DL-RS resources for measurement (for example, CSI-RS resources and/or SS/PBCH blocks), and information to indicate associations between DMRS ports and CSI-RSs.

The transmitting/receiving sections 203 may transmit configuration information pertaining to radio link failures (RLF) and/or beam recovery (BR).

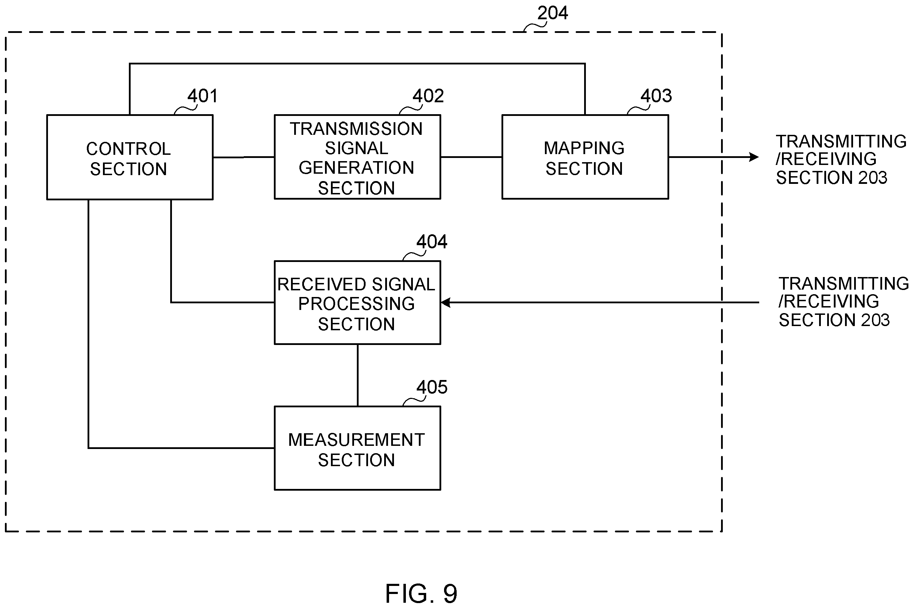

FIG. 9 is a diagram to illustrate an exemplary functional structure of a user terminal according to the present embodiment. Note that, although this example primarily illustrates functional blocks that pertain to characteristic parts of present embodiment, the user terminal 20 may have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and some or all of these configurations may not be included in the baseband signal processing section 204.

The control section 401 controls the whole of the user terminal 20. The control section 401 can be constituted by a controller, a control circuit or control apparatus that can be described based on general understanding of the technical field to which the present disclosure pertains.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on results of deciding whether or not retransmission control is necessary for the downlink control signals and/or downlink data signals, and so on.

The control section 401 may exert control so that transmitting beams and/or receiving beams are formed by using digital BF (for example, precoding) in the baseband signal processing section 204 and/or by using analog BF (for example, phase rotation) in the transmitting/receiving sections 203.

The control section 401 may control radio link monitoring (RLM) and/or beam recovery (BR) based on measurement results in the measurement section 405.

The control section 401 may control the monitoring (RLM) of the radio link quality of a first set (active set) of downlink signals that are assumed to be quasi-co-located with the DMRS for a PDCCH, and/or the radio link quality of a second set (candidate set) of downlink signals configured by the radio base station 10, based on hypothetical PDCCH information reported from the radio base station 10. These downlink signals may be CSI-RSs (resources) and/or SS/PBCH blocks.

The control section 401 may determine a first threshold Q_{out_1} and/or a second threshold Q_{in_1}, which correspond to a predetermined block error rates of the hypothetical downlink control channel, based on the hypothetical PDCCH information (first example).

The control section 401 may determine a third threshold Q_{out_2} and/or a fourth threshold Q_{in_2}, which correspond to a predetermined block error rates of the hypothetical downlink control channel, based on the hypothetical PDCCH information (first example).

The control section 401 may control beam failure detection based on at least one of first threshold Q_{out_1}, the radio link quality of downlink signals in the first set, and the radio link quality of downlink signals in the second set (FIGs. 4).

The control section 401 may control the configurations of RLF and/or BR based on configuration information related to radio link failures (RLF) and/or beam recovery (BR). Based on the relationship between these RLF and BR, the control section 401 may control the beam failure detection in the BR.

In addition, when various pieces of information reported from the radio base station 10 are acquired from the received signal processing section 404, the control section 401 may update the parameters used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generation apparatus that can be described based on general understanding of the technical field to which the present disclosure pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs these to the transmitting/receiving sections 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding and so on) for received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

### (Hardware Structure)

Note that the block diagrams that have been used to describe the present embodiment illustrate blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically-separate pieces of apparatus (by using cables and/or radio, for example) and using these multiple pieces of apparatus.

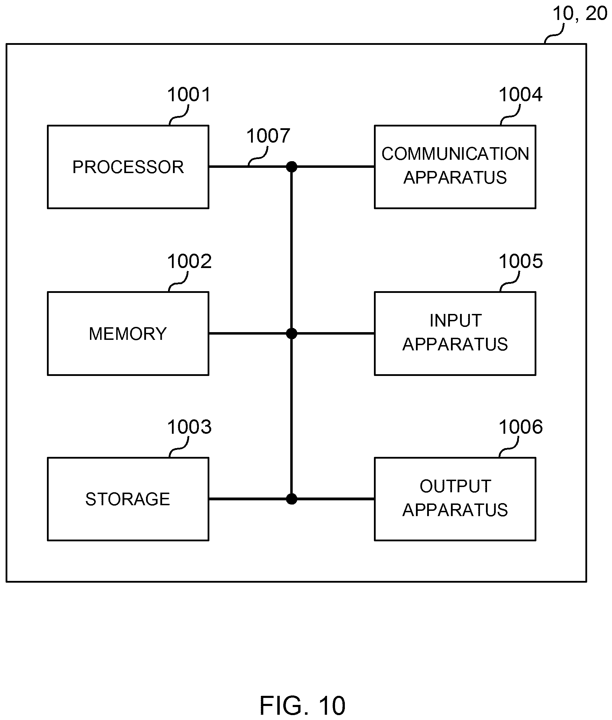

For example, the radio base station, user terminals, and so on according to the present embodiment may function as a computer that executes the processes of each example of the present embodiment. FIG. 10 is a diagram to illustrate an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, a bus 1007 and so on.

Note that, in the following description, the term "apparatus" may be replaced by "circuit," "device," "unit" and so on. Note that, the hardware structure of a radio base station 10 and a user terminal 20 may be designed to include one or more of each apparatus illustrated in the drawings, or may be designed not to include part of the apparatus.

For example, although only 1 processor 1001 is illustrated, a plurality of processors may be provided. Furthermore, processes may be implemented with one processor, or processes may be implemented simultaneously or in sequence, or by using different techniques, on one or more processors. Note that the processor 1001 may be implemented with one or more chips.

The functions of the radio base station 10 and the user terminal 20 are implemented by, for example, allowing hardware such as the processor 1001 and the memory 1002 to read predetermined software (programs), and allowing the processor 1001 to do calculations, control communication that involves the communication apparatus 1004, control the reading and/or writing of data in the memory 1002 and the storage 1003, and so on.

The processor 1001 may control the whole computer by, for example, running an operating system. The processor 1001 may be constituted by a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules, and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using cable and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer and so on, in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for allowing sending output to outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on, are connected by the bus 1007, so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by these pieces of hardware. For example, the processor 1001 may be implemented with at least one of these pieces of hardware.

### (Variations)

Note that, the terminology used in this specification and the terminology that is needed to understand this specification may be replaced by other terms that communicate the same or similar meanings. For example, a "channel" and/or a "symbol" may be replaced by a "signal" (or "signaling"). Also, a "signal" may be a "message." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency," and so on.

Furthermore, a radio frame may be comprised of one or more periods (frames) in the time domain. One or more periods (frames) that constitute a radio frame may be each referred to as a "subframe." Furthermore, a subframe may be comprised of one or multiple slots in the time domain. A subframe may be a fixed time duration (for example, 1 ms), which does not depend on numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot, and a symbol all refer to a unit of time in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "minislot" and so on, instead of a "subframe."

Here, a TTI refers to the minimum time unit for scheduling in radio communication, for example. For example, in LTE systems, a radio base station schedules the radio resources (such as the frequency bandwidth and transmission power each user terminal can use) to allocate to each user terminal in TTI units. Note that the definition of TTIs is not limited to this.

A TTI may be the transmission time unit of channel-encoded data packets (transport blocks), code blocks and/or codewords, or may be the unit of processing in scheduling, link adaptation, and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit for scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI (or a "fractional TTI")," a "shortened subframe," a "short subframe," a "minislot," a "sub-slot," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, minislots, symbols, and so on described above are simply examples. For example, configurations pertaining to the number of subframes included in a radio frame, the number of slots included in a subframe or a radio frame, the number of minislots included in a slot, the number of symbols and RBs included in a slot or a minislot, the number of subcarriers included in an RB, the number of symbols in a TTI, the symbol duration, the length of cyclic prefixes (CPs), and so on can be variously changed.

Also, the information and parameters described in this specification may be represented in absolute values or in relative values with respect to predetermined values, or may be represented using other applicable information. For example, a radio resource may be specified by a predetermined index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling, etc.), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as "RRC messages," and can be, for example, an "RRC connection setup message," "RRC connection reconfiguration message," and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent in an implicit way (for example, by not reporting this piece of information, by reporting another piece of information, and so on).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on), and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

Furthermore, the radio base stations in this specification may be interpreted as user terminals. For example, the examples/embodiments of the present disclosure may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts, and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second," and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database, or some other data structure), ascertaining, and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used herein, when two elements are connected, these elements may be considered "connected" or "coupled" to each other by using one or more electrical wires, cables, and/or printed electrical connections, and, as a number of non-limiting and non-inclusive examples, by using electromagnetic energy having wavelengths of the radio frequency region, the microwave region and/or the optical region (both visible and invisible).

In the present specification, the phrase "A and B are different" may mean "A and B are different from each other." The terms such as "leave," "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

### (Additional Notes)

Now, supplementary notes on the present disclosure will follow below.

There is an ongoing discussion to include the following items in the mechanism for UE beam failure recovery:
- Beam failure detection
- New candidate beam identification
- Beam failure recovery request transmission
- UE monitors gNB response for the beam failure recovery request.

Note that beam failure recovery may be referred to as "recovery from beam failures," "beam recovery (BR)," or the like.

The following items are under discussion:
- A beam failure is declared only when all the serving control channels fail.
- A failure of a subset of serving control channels may be also treated as a beam failure.

The following items are under discussion:
- If recovery from a beam failure fails, the UE transmits a specific indication (for example, an unsuccessful beam failure recovery indication) to higher layers so as to inhibit further beam failure recovery.
- Radio link failure (RLF) and the above specific indication (if any) are associated with each other. For example, whether the beam failure recovery procedures have an impact on RLF events, or are influenced by RLF events, may be determined.

If a beam failure occurs, it may be assumed that the quality of one or more beams related with all of the CORESETs configured is deteriorated below a threshold.

In addition, regarding beam failure detection, the following issues are contemplated:
- The UE should monitor a beam management reference signal to judge whether or not a downlink control channel (PDCCH (Physical Downlink Control CHannel)) can be detected. Note that the beam management reference signal may be, for example, a channel state information reference signal (CSI-RS), a synchronization signal block (SSB), and so forth.
- Each CORESET of the PDCCH is configured with (and/or associated with) one RS resource by a gNB.
- The UE measures the RS resources associated with each CORESET to estimate the channel quality of the PDCCH based on specific criteria, to judge whether or not a beam pair link (BPL) has failed, and so on.

In connection with beam failure detection, two quality metrics have been proposed. The first option is hypothetical performance of a PDCCH (NR-PDCCH), which is evaluated based on whether the synchronized (IS (In-Sync)) state or the non-synchronized (OOS (Out-Of-Sync)) state is assumed, as in radio link monitoring (RLM) in existing LTE. IS/OOS may be judged based on, for example, an SINR (Signal to Interference plus Noise Ratio) corresponding to a hypothetical PDCCH's block error rate (BLER).

The second option is an L1-RSRP (the reference signal received power (RSRP) in the physical layer)-based metric. Parameters for evaluation (for example, the threshold, the evaluation time window (period), etc.) are configurable.

Existing proposals related to these metrics have the following advantages and disadvantages. The first option is similar to and/or has high affinity with RLF control. Consistent metrics are used for beam failure evaluation and RLF. On the other hand, RSRP is not a direct criterion for the quality of control channels. Furthermore, when RSRP is used, filtering for ensuring that fading dip has no impact on RSRP takes a long time.

The second option is similar to and/or has high affinity with beam management control. Consistent metrics are used for beam failure evaluation and beam management. Beam recovery's primary purpose is to take measures against blockage (for example, blockage caused by obstacles), and the RSRP of signals and/or channels is often used as an indicator. When the beams in neighboring cells change quickly, interference measurements also change quickly. In such a case, a relatively long time is required to obtain a stable result, and L1 is not suitable. Since noise and/or interference do not have to be estimated (measured), the complexity on the UE side can be reduced.

In view of the above, which of the following options should be applied may be judged based on the association between RLF and beam recovery:
(1) The case where RLF and beam recovery are decoupled is supported. In this case, no specific indication (such as unsuccessful beam failure recovery indication) is transmitted to higher layers, regardless of the status of beam failure detection, the result of beam failure recovery, and so forth. Note that whether or not the user terminal transmits a specific indication to higher layers may be configured by the gNB.
(2) In the event the association between RLF and beam recovery (for example, processes associated with RLF and beam recovery) is supported and recovery from a beam failure fails, the UE transmits a specific indication (for example, unsuccessful beam failure recovery indication) to higher layers, to inhibit further beam failure recovery.
(3) In the event the association between RLF and beam recovery is supported and recovery from a beam failure succeeds, the UE transmits a specific indication (for example, successful beam failure recovery indication) to higher layers, to inhibit further beam failure recovery.

Also, the criterion (metric) for beam failure detection may be judged based on the association between RLF and beam recovery:
(A) When beam recovery is configured decoupled from RLF (for example, when the association between RLF and beam recovery is not supported), the criterion for beam recovery and/or beam failure detection is based on L1-RSRP.
(B) When beam recovery is configured coupled with RLF (for example, when the association between RLF and beam recovery is supported), the criterion for beam recovery and/or beam failure detection is based on the SINR (IS/OOS).

Note that the configuration of RLF, the configuration of beam recovery, the configuration of the association between RLF and beam recovery, and so forth may be configured by higher layer signaling (for example, one of RRC (Radio Resource Control) signaling, broadcast information (master information block (MIB), system information block (SIB), etc.), and MAC (Medium Access Control) signaling, or a combination of these).

For example, when the gNB configures beam recovery and RLF in a decoupled manner, in the UE, via RRC signaling or system information, the criterion for detecting beam failures may be based on L1-RSRP.

When the gNB configures beam recovery and RLF in a coupled manner, in the UE, via RRC signaling or system information, the criterion for detecting beam failures may be hypothetical performance of a PDCCH (NR-PDCCH), and evaluation may be made based on indications of IS/OOS, as in RLM in existing LTE.

Note that a threshold may be defined so that the downlink radio link quality associated with the first DL RS resource set indicates a level at which receipt cannot be performed reliably. This threshold may correspond to an X₁% BLER of hypothetical PDCCH transmission, at least in a subset of a specific parameter set. Here, X₁ may be 10, for example.

In the parameter set, the downlink control information (DCI) format, the number of OFDM (Orthogonal Frequency Division Multiplexing) symbols, the aggregation level, the demodulation reference signal (DMRS) pattern (configuration) and so forth may be common parameters.

When a PDCCH is quasi-co-located (QCL) with a CSI-RS, the ratio of the density of the DMRS for the PDCCH and the density of the CSI-RS, the ratio of the average energy (power) of the REs (Resource Elements) of the PDCCH and the average energy (power) of the REs of the CSI-RS, and so forth may be used as additional parameters.

Note that, if the first signal and the second signal are quasi-co-located (QCL), this may indicate that the pseudo geographic relationship of these signals is the same (can be considered the same). A "signal" as used here may be interpreted as meaning a "channel," an "antenna port," a "beam," and/or the like. For example, if different antenna ports share the same long-term channel characteristics, it may be assumed that these antenna ports are quasi-co-located (QCL).

If a PDCCH is quasi-co-located (QCL) with an SSB, the ratio of the average energy (power) of the REs of the PDCCH and the average energy (power) of the REs of a specific RS in the SSB, and so forth may be used as additional parameters. The RS here may be the primary synchronization signal (PSS (Primary SS)), the secondary synchronization signal (SSS (Secondary SS)), the demodulation reference signal (DMRS) for the PBCH (Physical Broadcast CHannel), or a combination thereof.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

[Configuration 1]
   A user terminal having:
   a receiving section that receives configuration information related to radio link failure (RLF) and/or beam recovery (BR); and
   a control section that controls beam failure detection in the BR based on a relationship between the RLF and the BR configured based on the configuration information.
[Configuration 2]
   The user terminal according to configuration 1, in which, when the BR is configured decoupled from the RLF, the beam failure detection is controlled based on RSRP (Reference Signal Received Power).
[Configuration 3]
   The user terminal according to configuration 1 or configuration 2, in which, when the BR is configured coupled with the RLF, the beam failure detection is controlled based on the SINR (Signal to Interference plus Noise Ratio).
[Configuration 4]
   The user terminal according to configuration 3, in which the SINR corresponds to a predetermined block error rate of a hypothetical downlink control channel.
[Configuration 5]
   A radio communication method comprising, in a user terminal, the steps of:
   receiving configuration information related to radio link failure (RLF) and/or beam recovery (BR); and
   controlling beam failure detection in the BR based on a relationship between the RLF and the BR configured based on the configuration information.

The disclosure of Japanese Patent Application No. 2017-195458, filed on September 19, 2017, including the specification, drawings and abstract, is incorporated herein by reference in its entirety.

## Claims

1. A user terminal comprising:
a receiving section that receives configuration information related to radio link failure (RLF) and/or beam recovery (BR); and
a control section that controls beam failure detection in the BR based on a relationship between the RLF and the BR configured based on the configuration information.

2. The user terminal according to claim 1, wherein, when the BR is configured decoupled from the RLF, the beam failure detection is controlled based on RSRP (Reference Signal Received Power).

3. The user terminal according to claim 1 or claim 2, wherein, when the BR is configured coupled with the RLF, the beam failure detection is controlled based on an SINR (Signal to Interference plus Noise Ratio).

4. The user terminal according to claim 3, wherein the SINR corresponds to a predetermined block error rate of a hypothetical downlink control channel.

5. A radio communication method comprising, in a user terminal, the steps of:
receiving configuration information related to radio link failure (RLF) and/or beam recovery (BR); and
controlling beam failure detection in the BR based on a relationship between the RLF and the BR configured based on the configuration information.
